# EUROPÄISCHE PATENTANMELDUNG

(11) **EP 4 331 965 A1**
(43) Veröffentlichungstag der Anmeldung: **06.03.2024**
(21) Anmeldenummer: 23195365.4
(22) Anmeldetag: 05.09.2023
(51) Int. Cl.: B62M 9/04, B62M 25/02

(54) **SCHALTUNGSADAPTER**

(30) Priorität: 05.09.2022 DE 102022122474
(71) Anmelder: b.c. bicycle and parts production GmbH, 4053 Basel (CH)
(72) Erfinder: COLLETTO, Biagio, 4053 Basel (CH); WÜTHRICH, Renato, 4143 Dornach (CH); NIKLAS, Simon, 93077 Bad Abbach (DE)
(74) Vertreter: Kraus & Lederer PartGmbB

(57) **Zusammenfassung**

Offenbart wird ein Schaltungsadapter (1100) für ein Schaltgetriebe, wobei das Schaltgetriebe (1200) eine Welle (1201) zur Steuerung der Übersetzung des Schaltgetriebes (1200) aufweist, wobei der Schaltungsadapter (1100) ein Gehäuse (1110) umfasst, wobei der Schaltungsadapter (1100) ein Zahnrad (1120) umfasst, welches zur drehfesten Verbindung mit der Welle (1201) eingerichtet ist, wobei der Schaltungsadapter (1100) eine erste Führung (1111) aufweist, wobei ein der Schaltungsadapter (1100) ein in der ersten Führung (1111) geführtes erstes Klinkenelement (1130) aufweist, wobei das erste Klinkenelement (1130) zur Befestigung eines ersten Zugseils (1310) eingerichtet ist, wobei bei Zug mit dem ersten Zugseil (1310) eine Sperrklinke (1131) des ersten Klinkenelements (1130) in Eingriff mit dem Zahnrad (1120), insbesondere mit einer Außenverzahnung (1121) des Zahnrads (1120), gelangt und ein Drehmoment auf das Zahnrad (1120) ausübt, wobei bei einer Bewegung des ersten Klinkenelements (1130) entgegen einer Zugrichtung des Zugseils (1310), die Sperrklinke des ersten Klinkenelements (1130) außer Eingriff mit dem Zahnrad (1120) gerät.

## Beschreibung

Die vorliegende Anmeldung betrifft einen Schaltungsadapter für ein Schaltgetriebe.

Schaltgetriebe für Fahrräder erfreuen sich aufgrund des verringerten Wartungsaufwandes einer immer größeren Beliebtheit. Als Schaltgetriebe werden üblicherweise mechanische Schaltgetriebe verwendet. Die Schaltgetriebe können dabei als Nabengetriebe in der Nabe eines Laufrads eines Fahrrads und/oder als Tretlagergetriebe an der Position des Tretlagers eines Fahrrads angeordnet sein.

Ein Beispiel für ein Nabengetriebe eines Fahrrads ist beispielsweise im deutschen Patent DE 19720796 B4 offenbart. In vergleichbarer Weise beschreibt das europäische Patent EP 2 512 909 B1 ein Tretlagergetriebe.

Die Übersetzung eines Schaltgetriebes für Fahrräder oder andere jedenfalls teilweise mit Muskelkraft betriebene Fahrzeuge wird üblicherweise durch Drehung einer Welle des Schaltgetriebes gesteuert. Ausgehend von einem in Griffweite des Nutzers befindlichen Schalter, welcher z.B. am Lenker des Fahrrads montiert ist, wird die Welle mit Hilfe von einem oder mehreren Zugseilen gedreht und damit die Übersetzung des Schaltgetriebes geändert.

Typische für die Verwendung mit Schaltgetrieben vorgesehene Drehschalter sind nicht kompatibel mit der Verwendung von Rennlenkern. In der DE 10 2013 017 504 A1 wird daher eine Betätigungseinrichtung für eine Mehrgang-Getriebenabe eines Fahrrades mit interner Rasterung vorgeschlagen. Die bekannte Betätigungseinrichtung umfasst ein Gehäuse, ein zum Schalten zu drehendes Antriebselement und zwei Zugseile, wobei die Betätigungseinrichtung mit voneinander unabhängigen Schaltelementen so ausgestattet ist, dass für einen Schaltvorgang nur eins der beiden Zugseile betätigt werden muss und das andere Seil nicht bewegt wird.

Es hat sich herausgestellt, dass mit der in der DE 10 2013 017 504 A1 vorgeschlagenen Betätigungseinrichtung einige Schaltgetriebe mit einigen Schaltern nicht betriebssicher angesteuert werden können.

Hiervon ausgehend lag der vorliegenden Erfindung folglich die Aufgabe zugrunde, einen Schaltungsadapter anzugeben, der sich durch eine höhere Anpassbarkeit an verschiedene Schalter und Schaltgetriebe auszeichnet.

Diese Aufgabe wurde mit dem Gegenstand des Hauptanspruchs gelöst. Vorteilhafte Ausgestaltungen sind in den Unteransprüchen angegeben.

Vorgeschlagen wird ein Schaltungsadapter für ein Schaltgetriebe. Das Schaltgetriebe weist eine Welle zur Steuerung der Übersetzung des Schaltgetriebes auf. Der Schaltungsadapter umfasst ein Gehäuse und ein Zahnrad, welches zur drehfesten Verbindung mit der Welle eingerichtet ist. Weiter weist der Schaltungsadapter eine erste Führung und ein in der ersten Führung geführtes erstes Klinkenelement auf. Das erste Klinkenelement ist zur Befestigung eines ersten Zugseils eingerichtet. Bei Zug mit dem ersten Zugseil gelangt eine Sperrklinke des ersten Klinkenelements in Eingriff mit dem Zahnrad, insbesondere mit einer Außenverzahnung des Zahnrads, und übt ein Drehmoment auf das Zahnrad aus. Bei einer Bewegung des ersten Klinkenelements entgegen einer Zugrichtung des Zugseils gerät die Sperrklinke des ersten Klinkenelements außer Eingriff mit dem Zahnrad.

In einer Ausgestaltung erstreckt sich die erste Führung dabei kreisbogenförmig entlang eines Umfangs des Zahnrads.

In einer weiteren Ausgestaltung erstreckt sich die erste Führung geradlinig und tangential zu dem Umfang des Zahnrads.

Auf diese Weise bleibt die Sperrklinke des ersten Klinkenelements besonders lange im Eingriff mit dem Zahnrad und kann dieses über einen besonders großen Winkel drehen. Zudem kann auf diese Weise die Relativbewegung zwischen Sperrklinke und Zahnrad und somit ein möglicher Verschleiß verringert werden.

Das Schaltgetriebe kann insbesondere ein mechanisches Schaltgetriebe sein. Beispielsweise kann es sich bei dem Schaltgetriebe um ein Getriebe für ein jedenfalls teilweise mit Muskelkraft betriebenes Fahrzeug, z.B. ein Fahrrad, handeln. Insbesondere kann das Schaltgetriebe ein Tretlagergetriebe sein. In anderen Beispielen kann das Schaltgetriebe ein Nabengetriebe sein.

In einer ersten Ausgestaltung des Schaltungsadapters ist die erste Führung im Gehäuse ausgebildet. Es kann sich dabei insbesondere um eine Ausnehmung im Gehäuse handeln. Dies kann eine besonders günstige Herstellung des Schaltungsadapters ermöglichen.

Weiter weist der Schaltungsadapter bevorzugt einen Rückstellmechanismus auf, welcher dazu eingerichtet ist, dass erste Klinkenelement entgegen einer Zugrichtung des ersten Zugseils zu bewegen. Der Rückstellmechanismus kann hierzu eine Feder, insbesondere eine Zugfeder oder Druckfeder, aufweisen. Dies kann es erlauben, durch mehrmaliges Ziehen des ersten Zugseils das Zahnrad und somit die mit diesem drehfest verbundene Welle des Schaltgetriebes über einen größeren Winkel zu drehen. Dies kann insbesondere dann vorteilhaft sein, wenn mit dem Schaltgetriebe eine größere Anzahl von Gängen ausgewählt werden kann.

In einigen Ausführungsbeispielen weist das erste Klinkenelement eine Aufnahme zur Aufnahme eines Nippels des ersten Zugseils auf. Dies kann die Befestigung des Zugseils am ersten Klinkenelement vereinfachen. In anderen Ausführungsbeispielen weist das erste Klinkenelement eine Klemmeinrichtung zur Befestigung des ersten Zugseils auf. Beispielsweise können Schrauben vorgesehen sein, um das erste Zugseil im ersten Klinkenelement festzuklemmen. In einigen Ausführungsbeispielen kann das erste Klinkenelement sowohl eine Aufnahme zur Aufnahme eines Nippels des ersten Zugseils aufweisen als auch eine Klemmeinrichtung zur Befestigung des ersten Zugseils aufweisen. Dies kann es erlauben, den Schaltungsadapter sowohl mit Schaltern zu verwenden, bei denen das Zugseil am Schalter festgeklemmt wird, als auch mit Schaltern, bei denen der Nippel des Zugseils in einer entsprechenden Aufnahme eingeführt wird.

In Ausgestaltungen des Schaltungsadapters kann die Sperrklinke des ersten Klinkenelements als Federelement ausgebildet ist. Beispielsweise kann die Sperrklinke aus einem Federstahl gefertigt sein.

Die Sperrklinke kann insbesondere auswechselbar am ersten Klinkenelement befestigt sein. Dies kann den Wechsel der Sperrklinke vereinfachen, wenn diese aufgrund starker Nutzung des Schaltungsadapters verschlissen sein sollte. Insbesondere kann auf diese Weise auf einen kompletten Austausch des ganzen Schaltungsadapters verzichtet und Ressourcen eingespart werden.

Der Schaltungsadapter kann eine zweite Führung, welche sich kreisbogenförmig entlang des Umfangs des Zahnrads oder geradlinig tangential zu dem Umfang des Zahnrads erstreckt, und ein in der zweiten Führung geführtes zweites Klinkenelement aufweisen, wobei das zweite Klinkenelement zur Befestigung eines zweiten Zugseils eingerichtet ist, und wobei bei Zug auf das zweite Zugseil eine Sperrklinke des zweiten Klinkenelements in Eingriff mit dem Zahnrad gelangt und ein Drehmoment auf das Zahnrad ausübt, welches entgegengesetzt zu dem Drehmoment ist, welches bei Zug mit dem ersten Zugseil auf das Zahnrad ausgeübt wird.

Schließlich wird eine Schaltung mit einem Schaltgetriebe und einem voranstehend beschriebenen Schaltungsadapter vorgeschlagen.

Nachfolgend werden Ausführungsbeispiele unter Bezugnahme auf die Zeichnung weiter erläutert. Dabei zeigt:
Fig. 1 schematisch eine Schaltung mit einem Schaltungsadapter in einer Explosionsansicht;
Fig. 2 schematisch die Schaltung von Fig. 1 in einer perspektivischen Ansicht;
Fig. 3 schematisch die Schaltung von Fig. 1 und 2 in einer Schnittansicht, und
Fig. 4 schematisch einen weiteren Schaltungsadapter in einer Explosionsansicht.

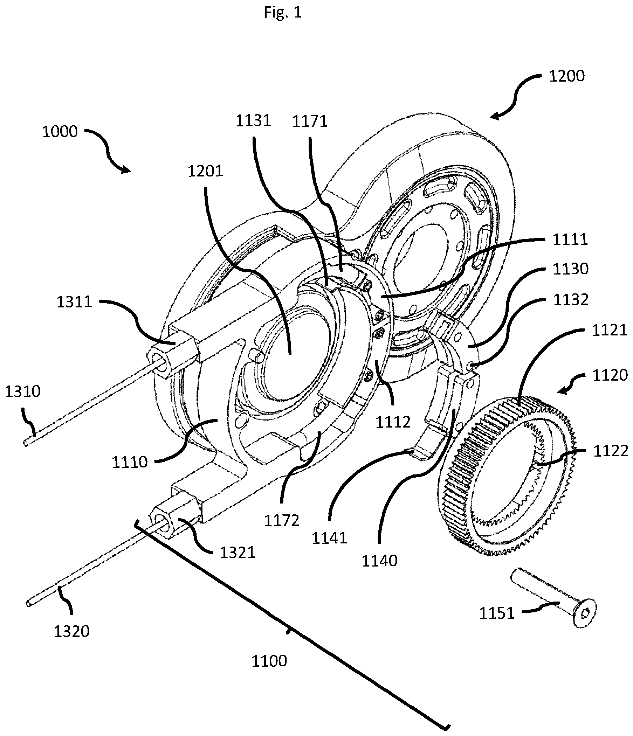

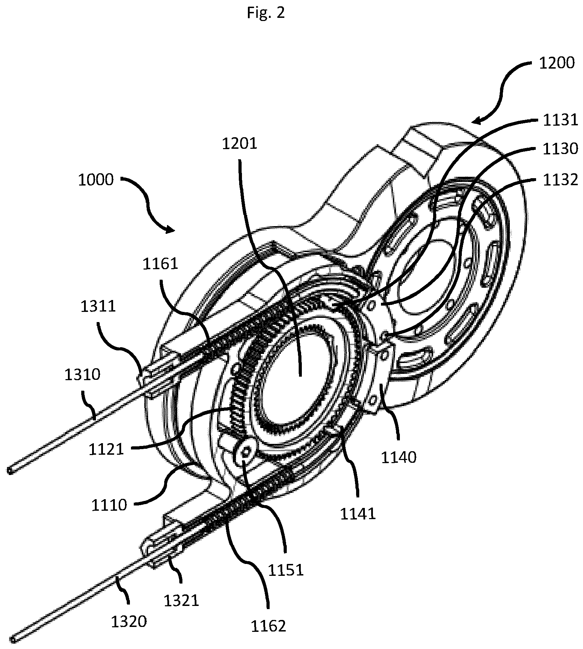

Die in Fig. 1 bis Fig. 3 dargestellte Schaltung 1000 umfasst einen Schaltungsadapter 1100 und ein Schaltgetriebe 1200. Bei dem Schaltgetriebe 1200 handelt es sich um ein mechanisches Schaltgetriebe 1200 in Form eines Tretlagergetriebes. Das Tretlagergetriebe 1200 kann in einem jedenfalls teilweise mit Muskelkraft betriebenen Fahrzeug eingebaut sein. Beispielsweise kann das Tretlagergetriebe 1200 Bestanteil eines Fahrrads sein. Das Schaltgetriebe 1200 weist eine Welle 1201 auf, mit welcher die Übersetzung des Schaltgetriebes 1200 gesteuert werden kann. Durch Drehung der Welle 1201 kann insbesondere ein anderer Gang des Tretlagergetriebes 1200 gewählt werden. Das Tretlagergetriebe 1200 kann insbesondere eine interne Rasterung aufweisen.

Der Schaltungsadapter 1100 umfasst ein Gehäuse 1110 und einen Deckel (nicht dargestellt), der beispielsweise mit einer Schraube 1151 an das Gehäuse 1110 angeschraubt werden kann, um das Innere des Schaltungsadapter 1100 vor Staub, Feuchtigkeit, etc. zu schützen. Hierzu kann zwischen dem Gehäuse 1110 und dem Deckel zusätzlich noch eine Dichtung vorgesehen sein.

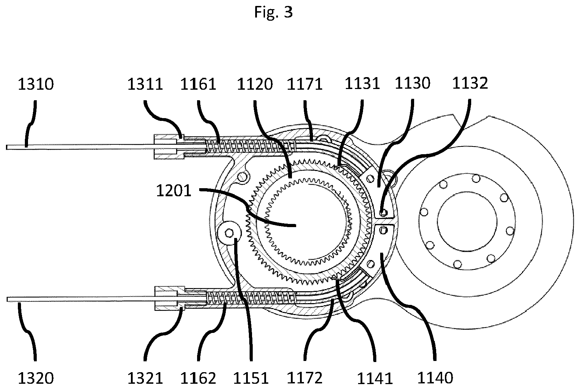

Der Schaltungsadapter 1100 weist weiter ein Zahnrad 1120 auf, welches zur drehfesten Verbindung mit der Welle 1201 eingerichtet ist. Insbesondere kann das Zahnrad 1120 eine Innenverzahnung 1122 aufweisen, die mit einer entsprechenden, in der Fig. 3 angedeuteten Außenverzahnung der Welle 1201 zusammenwirkt.

Im Gehäuse 1110 des Schaltungsadapter 1100 ist eine erste Führung 1111 vorgesehen, in welcher ein erstes Klinkenelement 1130 geführt wird. Das erste Klinkenelement 1130 ist zur Befestigung eines ersten Zugseils 1310 eingerichtet. In dem in Fig. 1 dargestellten Beispiel weist das erste Klinkenelement 1130 eine Klemmeinrichtung 1132 zur Befestigung des ersten Zugseils 1310 in Form von Klemmschrauben 1132 auf.

Bei Zug mit dem ersten Zugseil 1310 greift eine Sperrklinke 1131 des ersten Klinkenelements 1130 in eine Außenverzahnung 1121 des Zahnrads 1120 und übt ein Drehmoment auf das Zahnrad 1120 auf, das letztlich zu einer Drehung des Zahnrads 1120 und der damit drehfest verbundenen Welle 1201 des Tretlagergetriebes 1200 führt. Mit Hilfe des ersten Zugseils 1310 kann folglich der eingelegte Gang des Tretlagergetriebes 1200 geändert werden. Beispielsweise kann ein höherer Gang eingelegt werden.

Bei einer Bewegung des ersten Klinkenelements 1130 entgegen einer Zugrichtung des Zugseils 1310 gerät die Sperrklinke 1131 des ersten Klinkenelements 1130 außer Eingriff mit dem Zahnrad 1120. Mit anderen Worten übt die Sperrklinke 1131 in diesem Fall kein für eine Drehung der Welle 1201 ausreichendes Drehmoment auf das Zahnrad 1120 auf.

Durch die sich kreisbogenförmig entlang eines Umfangs des Zahnrads 1120 erstreckende erste Führung 1111 kann die Sperrklinke 1131 des ersten Klinkenelements 1130 bei Zug mit dem ersten Zugseil 1310 über eine lange Wegstrecke mit der Außenverzahnung 1121 des Zahnrads 1120 in Eingriff bleiben und die Welle 1201 im Ergebnis um einen besonders großen Winkel gedreht werden.

Die Sperrklinke 1131 des Klinkenelements 1130 kann so in dem Klinkenelement 1130 befestigt sein, dass die Sperrklinke 1131 bei Verschleiß schnell ausgetauscht werden kann. Die Sperrklinke 1131 kann insbesondere aus einem Stück Federstahl gefertigt sein.

Der Schaltungsadapter 1100 weist weiter eine zweite Führung 1112 auf, welche sich ebenfalls kreisbogenförmig entlang des Umfangs des Zahnrads 1120 erstreckt. Ein zweites Klinkenelement 1140 ist in der zweiten Führung 1112 geführt und zur Befestigung eines zweiten Zugseils 1320 eingerichtet. Bei Zug mit dem zweiten Zugseil 1320 gelangt eine Sperrklinke 1141 des zweiten Klinkenelements 1140 in Eingriff mit dem Zahnrad 1120 und übt ein Drehmoment auf das Zahnrad 1120 aus, welches entgegengesetzt zu dem Drehmoment ist, welches bei Zug mit dem ersten Zugseil 1310 auf das Zahnrad 1120 ausgeübt wird. Mit anderen Worten kann mit dem ersten Zugseil 1310 die Welle 1210 in eine erste Richtung und mit dem zweiten Zugseil 1320 in die Gegenrichtung bewegt werden. Beispielsweise können mit dem ersten Zugseil 1310 höhere und mit dem zweiten Zugseil 1320 niedrigere Gänge eingelegt werden.

Zur Rückstellung des ersten Klinkenelements 1130 und des zweiten Klinkenelements 1140 in die in den Figuren gezeigte Position kann jeweils ein Rückstellmechanismus vorgesehen sein. Der Rückstellmechanismus kann insbesondere eine Feder, beispielsweise eine Zugfeder oder Druckfeder 1161, 1162 aufweisen. Einige Ausführungsbeispiele können vorsehen, dass das erste Zugseil 1310 und/oder das zweite Zugseil 1320 innerhalb des Gehäuses 1110 durch die in dem gezeigten Ausführungsbeispiel als Spiralfedern ausgeführte Druckfedern 1161, 1162 geführt sind, die zwischen dem Gehäuse 1110 und dem ersten Klinkenelement 1130 bzw. dem zweiten Klinkenelement 1140 angeordnet ist. Die jeweilige Druckfeder 1161, 1162 kann zum einen für eine optimale Führung des jeweiligen Zugseils 1310, 1320 sorgen und zum anderen für eine Rückstellung des ersten Klinkenelements 1130 bzw. des zweiten Klinkenelement 1140 sorgen, wenn kein Zug mehr auf das erste Zugseil 1310 bzw. zweite Zugseil 1320 ausgeübt wird. Zur Verbesserung der Führung des ersten Zugseils 1310 und des zweiten Zugseils 1320 entlang der kreisbogenförmigen ersten Führung 1111 bzw. kreisbogenförmigen zweiten Führung 1112 kann weiter jeweils eine Kunststoffhülse 1171 bzw. 1172 vorgesehen sein, durch welche das erste Zugseil 1310 bzw. das zweite Zugseil 1320 hindurchgeführt ist.

Die Spannung des als Bowdenzug ausgeführten ersten Zugseils 1310 und zweiten Zugseils 1320 kann mit entsprechenden Spannschrauben 1311, 1321 eingestellt werden.

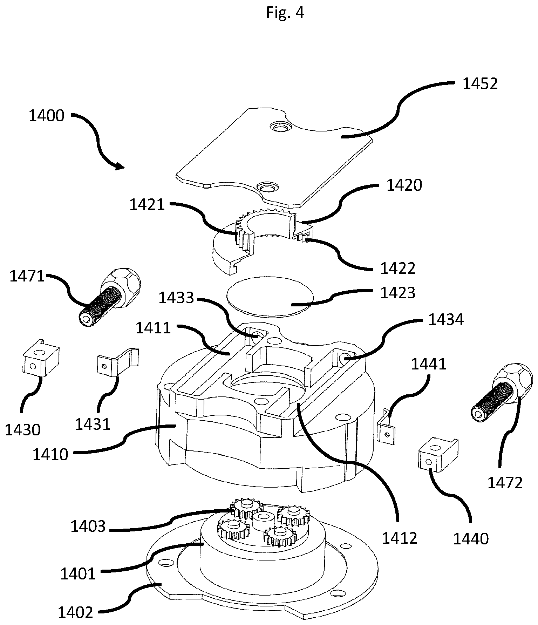

Fig. 4 zeigt einen weiteren Schaltungsadapter 1400 für ein Schaltgetriebe, beispielsweise ein Tretlagergetriebe. Von dem Schaltgetriebe ist in Fig. 4 lediglich ein Teil gezeigt, nämlich eine Getriebeplattform 1402 mit einer Welle 1401. Der Schaltungsadapter 1400 ist mit der Welle 1401 drehfest verbindbar, um mittels einer Drehung der Welle 1401 eine Übersetzung des Schaltgetriebes einzustellen.

Der Schaltungsadapter 1400 umfasst ein Gehäuse 1410 und einen Deckel 1452, der beispielsweise mittels einer oder mehrerer Schrauben an das Gehäuse 1410 angeschraubt werden kann, um das Innere des Schaltungsadapter 1400 zu schützen.

Der Schaltungsadapter 1400 weist ein Zahnrad 1420 auf, welches zur drehfesten Verbindung mit der Welle 1401 eingerichtet ist. Das Zahnrad 1420 ist in Fig. 4 in einer perspektivischen Schnittansicht dargestellt. Die drehfeste Verbindung kann, wie in Fig. 4 gezeigt, über ein oder mehrere Zahnräder 1403 an der Welle 1401 erfolgen, um eine Übersetzung zwischen einer Drehung des Zahnrads 1420 und einer Drehung der Welle 1401 einzustellen. Insbesondere kann das Zahnrad 1420 eine Innenverzahnung 1422 aufweisen, die mit einer entsprechenden Verzahnung oder Zahnrädern 1403 an der Welle 1401 zusammenwirkt. Ein Gleitring 1423 kann zwischen dem Zahnrad 1420 und dem Gehäuse 1410 oder der Welle 1401 vorgesehen sein.

Im Gehäuse 1410 des Schaltungsadapter 1400 ist eine erste Führung 1411 vorgesehen, in welcher ein erstes Klinkenelement 1430 geführt wird. Das erste Klinkenelement 1430 ist zur Befestigung eines (nicht gezeigten) ersten Zugseils eingerichtet. Das erste Zugseil kann durch eine Öffnung 1433 in die erste Führung 1411 eingeführt werden und beispielsweise mit einem Nippel an dem ersten Klinkenelement 1430 befestigt werden.

Bei Zug mit dem ersten Zugseil bewegt sich das erste Klinkenelement 1430 in einer Längsrichtung der ersten Führung 1411 und eine Sperrklinke 1431 des ersten Klinkenelements 1430 greift in eine Außenverzahnung 1421 des Zahnrads 1420 ein, wodurch ein Drehmoment auf das Zahnrad 1420 ausgeübt wird, das letztlich zu einer Drehung des Zahnrads 1420 und der damit verbundenen Welle 1401 des Schaltgetriebes führt. Mit Hilfe des ersten Zugseils kann folglich der eingelegte Gang des Schaltgetriebes geändert werden. Beispielsweise kann ein höherer Gang eingelegt werden.

Bei einer Bewegung des ersten Klinkenelements 1430 entgegen der Zugrichtung des ersten Zugseils löst sich der Eingriff der Sperrklinke 1431 des ersten Klinkenelements 1430 von dem Zahnrad 1420. Mit anderen Worten übt die Sperrklinke 1431 in diesem Fall kein Drehmoment auf das Zahnrad 1420 auf, welches für eine Drehung der Welle 1401 ausreicht.

Die erste Führung 1411 erstreckt sich geradlinig und tangential zu dem Umfang der Außenverzahnung 1421 des Zahnrads 1420. Dadurch kann die Sperrklinke 1431 des ersten Klinkenelements 1430 bei Zug mit dem ersten Zugseil über eine bestimmte Wegstrecke hinweg mit der Außenverzahnung 1121 des Zahnrads 1120 kraftvoll und mit wenig Reibung in Bezug auf die erste Führung 1411 in Eingriff gebracht werden. Ein Durchmesser der Außenverzahnung 1421 kann kleiner als ein Durchmesser der Innenverzahnung 1422 sein. Dadurch kann die Welle 1401 auch bei wenig Zugweg des ersten Zugseils um einen großen Winkel gedreht werden. Der Verdrehwinkel der Welle kann beispielsweise weiter vergrößert werden, indem die Verbindung mit der Welle 1401 über eine geeignete Übersetzung zwischen der Innenverzahnung 1422 und den Zahnrädern 1403 erfolgt.

Die Sperrklinke 1431 des Klinkenelements 1430 kann so an dem Klinkenelement 1430 befestigt sein, dass die Sperrklinke 1431 bei Verschleiß einfach ausgetauscht werden kann. Die Sperrklinke 1431 kann insbesondere aus einem Federstahl gefertigt sein.

Der Schaltungsadapter 1400 kann ferne eine zweite Führung 1412 aufweisen, welche sich ebenfalls geradlinig und tangential zu dem Umfang des Zahnrads 1420 erstreckt. Die zweite Führung 1412 kann parallel zu der ersten Führung 1411 verlaufen und an einer gegenüberliegenden Seite des Umfangs des Zahnrads 1420 angeordnet sein. Ein zweites Klinkenelement 1440 ist in der zweiten Führung 1412 geführt und zur Befestigung eines (nicht gezeigten) zweiten Zugseils eingerichtet. Das zweite Zugseil kann durch eine Öffnung 1434 in die zweite Führung 1412 eingeführt werden und beispielsweise mit einem Nippel an dem zweiten Klinkenelement 1440 befestigt werden. Bei Zug mit dem zweiten Zugseil gelangt eine Sperrklinke 1441 des zweiten Klinkenelements 1440 in Eingriff mit dem Zahnrad 1420 und übt ein Drehmoment auf das Zahnrad 1420 aus, welches entgegengesetzt zu dem Drehmoment ist, welches bei Zug mit dem ersten Zugseil auf das Zahnrad 1420 ausgeübt wird. Mit anderen Worten kann mit dem ersten Zugseil die Welle 1410 in eine erste Richtung und mit dem zweiten Zugseil in die Gegenrichtung bewegt werden. Beispielsweise können mit dem ersten Zugseil höhere Gänge und mit dem zweiten Zugseil niedrigere Gänge eingestellt werden.

Zur Rückstellung des ersten Klinkenelements 1430 und des zweiten Klinkenelements 1440 kann jeweils ein Rückstellmechanismus vorgesehen sein. Der Rückstellmechanismus kann insbesondere eine Feder, beispielsweise eine Zugfeder oder Druckfeder aufweisen.

Eine Spannung des ersten bzw. zweiten Zugseils kann mit entsprechenden Spannschrauben 1471, 1472 eingestellt werden, welche in Gewinde in den Öffnungen 1433 bzw. 1434 eingreifen.

Zusammenfassend wird mit den vorgeschlagenen Schaltungsadaptern 1100, 1400 die Möglichkeit geschaffen, Schaltgetriebe 1200 für jedenfalls teilweise muskelbetriebene Fahrzeuge mit einer Vielzahl von Schaltern zu kombinieren und damit den Nutzerkomfort zu erhöhen.

## Patentansprüche

1. Schaltungsadapter (1100, 1400) für ein Schaltgetriebe (1200),
wobei das Schaltgetriebe (1200) eine Welle (1201, 1401) zur Steuerung der Übersetzung des Schaltgetriebes (1200) aufweist,
wobei der Schaltungsadapter (1100, 1400) ein Gehäuse (1110, 1410) umfasst,
wobei der Schaltungsadapter (1100, 1400) ein Zahnrad (1120, 1420) umfasst, welches zur drehfesten Verbindung mit der Welle (1201, 1401) eingerichtet ist,
wobei der Schaltungsadapter (1100, 1400) eine erste Führung (1111, 1411) aufweist,
wobei der Schaltungsadapter (1100, 1400) ein in der ersten Führung (1111, 1411) geführtes erstes Klinkenelement (1130, 1430) aufweist,
wobei das erste Klinkenelement (1130, 1430) zur Befestigung eines ersten Zugseils (1310) eingerichtet ist,
wobei bei Zug mit dem ersten Zugseil (1310) eine Sperrklinke (1131, 1431) des ersten Klinkenelements (1130, 1430) in Eingriff mit dem Zahnrad (1120, 1420), insbesondere mit einer Außenverzahnung (1121, 1421) des Zahnrads (1120, 1420), gelangt und ein Drehmoment auf das Zahnrad (1120, 1420) ausübt,
wobei bei einer Bewegung des ersten Klinkenelements (1130, 1430) entgegen einer Zugrichtung des Zugseils (1310), die Sperrklinke (1131, 1431) des ersten Klinkenelements (1130, 1430) außer Eingriff mit dem Zahnrad (1120, 1420) gerät.

2. Schaltungsadapter (1100) nach Patentanspruch 1,
wobei sich die erste Führung (1111) kreisbogenförmig entlang eines Umfangs des Zahnrads (1120) erstreckt.

3. Schaltungsadapter (1400) nach Patentanspruch 1,
wobei sich die erste Führung (1411) geradlinig und tangential zu einem Umfang des Zahnrads (1420) erstreckt.

4. Schaltungsadapter (1100, 1400) nach einem der Patentansprüche 1 bis 3,
wobei die erste Führung (1111, 1411) im Gehäuse (1110) ausgebildet ist

5. Schaltungsadapter (1100, 1400) nach Patentanspruch 4,
wobei der Schaltungsadapter (1100, 1400) einen Rückstellmechanismus aufweist, welcher dazu eingerichtet ist, dass erste Klinkenelement (1130, 1430) entgegen einer Zugrichtung des ersten Zugseils (1310) zu bewegen.

6. Schaltungsadapter (1100, 1400) nach Patentanspruch 5,
wobei der Rückstellmechanismus eine Feder, insbesondere eine Zugfeder oder Druckfeder (1161), aufweist.

7. Schaltungsadapter (1100, 1400) nach einem der Patentansprüche 1 bis 6,
wobei das erste Klinkenelement (1130, 1430) eine Aufnahme zur Aufnahme eines Nippels des ersten Zugseils (1310) aufweist.

8. Schaltungsadapter (1100, 1400) nach einem der Patentansprüche 1 bis 7,
wobei das erste Klinkenelement (1130, 1430) eine Klemmeinrichtung (1132) zur Befestigung des ersten Zugseils (1310) aufweist.

9. Schaltungsadapter (1100, 1400) nach einem der Patentansprüche 1 bis 8,
wobei die Sperrklinke (1131, 1431) des ersten Klinkenelements (1130, 1430) als Federelement ausgebildet ist.

10. Schaltungsadapter (1100, 1400) nach einem der Patentansprüche 1 bis 9,
wobei die Sperrklinke (1131, 1431) des ersten Klinkenelements (1130, 1430) auswechselbar am ersten Klinkenelement (1130, 1430) befestigt ist.

11. Schaltungsadapter (1100) nach einem der Patentansprüche 1 bis 10,
wobei der Schaltungsadapter (1100) eine zweite Führung (1112) aufweist, welche sich kreisbogenförmig entlang des Umfangs des Zahnrads (1120) erstreckt,
wobei der Schaltungsadapter (1100) ein in der zweiten Führung (1112) geführtes zweites Klinkenelement (1140) aufweist,
wobei das zweite Klinkenelement (1140) zur Befestigung eines zweiten Zugseils (1320) eingerichtet ist,
wobei bei Zug mit dem zweiten Zugseil (1320) eine Sperrklinke (1141) des zweiten Klinkenelements (1140) in Eingriff mit dem Zahnrad (1120) gelangt und ein Drehmoment auf das Zahnrad (1120) ausübt, welches entgegengesetzt zu dem Drehmoment ist, welches bei Zug mit dem ersten Zugseil (1310) auf das Zahnrad (1120) ausgeübt wird.

12. Schaltungsadapter (1400) nach einem der Patentansprüche 1 bis 10, wobei der Schaltungsadapter (1400) eine zweite Führung (1412) aufweist, welche sich geradlinig und tangential zu dem Umfang des Zahnrads (1420) erstreckt,
wobei der Schaltungsadapter (1400) ein in der zweiten Führung (1412) geführtes zweites Klinkenelement (1440) aufweist,
wobei das zweite Klinkenelement (1440) zur Befestigung eines zweiten Zugseils eingerichtet ist,
wobei bei Zug mit dem zweiten Zugseil eine Sperrklinke (1441) des zweiten Klinkenelements (1440) in Eingriff mit dem Zahnrad (1420) gelangt und ein Drehmoment auf das Zahnrad (1420) ausübt, welches entgegengesetzt zu dem Drehmoment ist, welches bei Zug mit dem ersten Zugseil auf das Zahnrad (1420) ausgeübt wird.

13. Schaltung (1000)
mit einem Schaltgetriebe (1200) und
mit einem Schaltungsadapter (1100, 1400) nach einem der Patentansprüche 1 bis 12.
